(19) **Europäisches Patentamt / European Patent Office / Office européen des brevets**

(11) **EP 4 654 303 A1**

(12) **EUROPEAN PATENT APPLICATION**

(43) Date of publication:
26.11.2025  Bulletin 2025/48

(21) Application number: 25152769.3

(22) Date of filing: 20.01.2025

(51) International Patent Classification (IPC):
$H01M\ 8/0206^{(2016.01)}$   $H01M\ 8/0228^{(2016.01)}$
$H01M\ 8/0232^{(2016.01)}$   $H01M\ 8/0245^{(2016.01)}$
$H01M\ 8/0247^{(2016.01)}$

(52) Cooperative Patent Classification (CPC):
H01M 8/0228; H01M 8/0206; H01M 8/0232;
H01M 8/0245; H01M 8/0247; H01M 2008/1293

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority:  22.05.2024  JP 2024083297

(71) Applicants:
• Kabushiki Kaisha Toshiba
  Tokyo 105-0023 (JP)
• Toshiba Energy Systems & Solutions
  Corporation
  Saiwai-ku
  Kawasaki-shi
  Kanagawa 2120013 (JP)

(72) Inventors:
• KOBAYASHI, Shohei
  Kawasaki-shi, Kanagawa (JP)
• SAITO, Kazuhiro
  Kawasaki-shi, Kanagawa (JP)
• MATSUNAGA, Kentaro
  Kawasaki-shi, Kanagawa (JP)
• OSADA, Norikazu
  Kawasaki-shi, Kanagawa (JP)
• KAWAMORI, Hiroaki
  Kawasaki-shi, Kanagawa (JP)

(74) Representative: Hoffmann Eitle
Patent- und Rechtsanwälte PartmbB
Arabellastraße 30
81925 München (DE)

(54) **ELECTROCHEMICAL DEVICE**

(57)   In an electrochemical device of an embodiment, a cell stack includes electrochemical cells stacked to be arranged in a stack direction, each of interconnectors is interposed between each of the plurality of electrochemical cells, and each of gasket sealing members is provided to surround a housing space for the electrochemical cell, at a position between each of the interconnectors. The electrochemical cell has a hydrogen electrode current collector and an oxygen electrode current collector. At least either of the hydrogen electrode current collector and the oxygen electrode current collector includes at least a first current collector layer and a second current collector layer, the first current collector layer and the second current collector layer being stacked in the stack direction, and a Young's modulus of the first current collector layer and a Young's modulus of the second current collector layer are different.

FIG. 1B   1

EP 4 654 303 A1

**Description**

FIELD

Embodiments of the present invention relate to an electrochemical device.

BACKGROUND

An electrochemical device includes an electrochemical cell configured to sandwich an electrolyte membrane by a hydrogen electrode and an oxygen electrode.

In the electrochemical cell, the electrolyte membrane is formed of a solid oxide, for example. The electrochemical cell having the electrolyte membrane being the solid oxide functions as at least either a SOFC (Solid Oxide Fuel Cell) or a SOEC (Solid Oxide Electrolysis Cell).

When the above-described electrochemical cell functions as the SOFC, a fuel cell reaction occurs under a high operating temperature (600 to 900°C, for example), which generates electric energy. In the fuel cell reaction, a hydrogen electrode gas (a reducing gas; hydrogen, hydrocarbon, ammonia, or the like) supplied to the hydrogen electrode, and an oxygen electrode gas (an oxidizing gas; oxygen, air, or the like) supplied to the oxygen electrode react via the electrolyte membrane. On the contrary, when the above-described electrochemical cell functions as the SOEC, a reaction opposite to the reaction when the above-described electrochemical cell functions as the SOFC occurs, and water vapor is decomposed into hydrogen and oxygen under a high operating temperature (700°C or more, for example).

The electrochemical device includes a cell stack including a plurality of electrochemical cells, the plurality of electrochemical cells being stacked in a stack direction. An interconnector (separator) is interposed at a position between each of the plurality of electrochemical cells arranged in the stack direction in the cell stack. Further, at a position between each of a plurality of interconnectors arranged in the stack direction in the cell stack, a gasket sealing member is provided so as to surround a housing space that houses the electrochemical cell. Further, in the housing space that houses the electrochemical cell, a hydrogen electrode current collector is interposed between the hydrogen electrode and the interconnector, and an oxygen electrode current collector is interposed between the oxygen electrode and the interconnector.

In the electrochemical device, a load is applied to the cell stack in the stack direction. This increases the adhesiveness between the interconnector and the gasket sealing member, so that the occurrence of gas leakage of the hydrogen electrode gas, the oxygen electrode gas, and the like can be suppressed in the housing space that houses the electrochemical cell. Further, the adhesiveness among the hydrogen electrode, the hydrogen electrode current collector, and the interconnector, and the adhesiveness among the oxygen electrode, the oxygen electrode current collector, and the interconnector are increased, resulting in that electrical resistance between respective parts can be reduced. On the other hand, when the load with respect to the cell stack is excessive in the electrochemical device, breakage of the electrochemical cell may occur.

Accordingly, there has been proposed a mechanism and the like of adjusting the load with respect to the cell stack.

However, the electrochemical cell is a stack of layers formed of different kinds of materials, so that warpage may occur. Accordingly, since projections and recesses may exist at a surface that is brought into contact with the oxygen electrode current collector and the like in the electrochemical cell, the load that is applied in the stack direction may not be uniform at the surface of the electrochemical cell. Since the operating temperature of the electrochemical cell is high (600°C or more), even if the load is uniformly applied at a normal temperature, the load sometimes becomes nonuniform under the operating temperature due to thermal expansion and the like.

At a portion on the surface of the electrochemical cell at which the load to be applied is small, the electrical resistance becomes large. At a portion on the surface of the electrochemical cell at which the load to be applied is large, the possibility of the occurrence of breakage becomes high. Further, the adhesiveness between the interconnector and the gasket sealing member, for example, is sometimes lowered due to the nonuniform application of the load, so that it is sometimes difficult to sufficiently realize the prevention of gas leakage.

For example, a case will be explained in which a center portion of the surface of the electrochemical cell is warped so as to project in a convex form in a room temperature atmosphere. In this case, the center portion of the surface of the electrochemical cell is sufficiently brought into contact with the oxygen electrode current collector and the like in the room temperature atmosphere, so that the electrical resistance is appropriate. However, when the electrochemical cell is exposed to a high temperature atmosphere in which the temperature is higher than the room temperature for operating the electrochemical cell, the projecting height in the convex form is reduced at the center portion of the surface of the electrochemical cell. For this reason, in the high temperature atmosphere, the center portion of the surface of the electrochemical cell is sometimes insufficiently brought into contact with the oxygen electrode current collector and the like, which increases the electrical resistance.

As a result of this, the performance of the electrochemical device is lowered in some cases.

Accordingly, the problem to be solved by the present invention is to provide an electrochemical device capable of realizing prevention of increase in electrical resistance and the like to easily improve the performance.

BRIEF DESCRIPTION OF THE DRAWINGS

FIG. 1A is a view schematically illustrating an electrochemical device 1 according to an embodiment.
FIG. 1B is a view schematically illustrating the electrochemical device 1 according to the embodiment.
FIG. 2 is a view schematically illustrating an oxygen electrode current collector 22 of a modified example 1.
FIG. 3A is a view schematically illustrating an oxygen electrode current collector 22 of a modified example 2.
FIG. 3B is a view schematically illustrating the oxygen electrode current collector 22 of the modified example 2.
FIG. 4 is a view illustrating an I-V characteristic obtained regarding each example.

DETAILED DESCRIPTION

An electrochemical device of an embodiment includes a cell stack including a plurality of electrochemical cells each configured to sandwich an electrolyte membrane by a hydrogen electrode and an oxygen electrode, the plurality of electrochemical cells being stacked to be arranged in a stack direction. The cell stack includes a plurality of interconnectors and a plurality of gasket sealing members. Each of the plurality of interconnectors is interposed between each of the plurality of electrochemical cells arranged in the stack direction, and includes a first interconnector surface on a side of the hydrogen electrode, and a second interconnector surface on a side of the oxygen electrode. Each of the plurality of gasket sealing members is provided to surround a housing space that houses the electrochemical cell, at a position between each of the plurality of interconnectors arranged in the stack direction. Each of the plurality of electrochemical cells has a hydrogen electrode current collector, and an oxygen electrode current collector. The hydrogen electrode current collector is interposed between the hydrogen electrode and the first interconnector surface in the housing space, and is brought into contact with the hydrogen electrode and the first interconnector surface. The oxygen electrode current collector is interposed between the oxygen electrode and the second interconnector surface in the housing space, and is brought into contact with the oxygen electrode and the second interconnector surface. At least either of the hydrogen electrode current collector and the oxygen electrode current collector includes at least a first current collector layer and a second current collector layer, the first current collector layer and the second current collector layer being stacked in the stack direction, and a Young's modulus of the first current collector layer and a Young's modulus of the second current collector layer are different.

An example of an embodiment will be explained.

[A] Configuration of electrochemical device 1

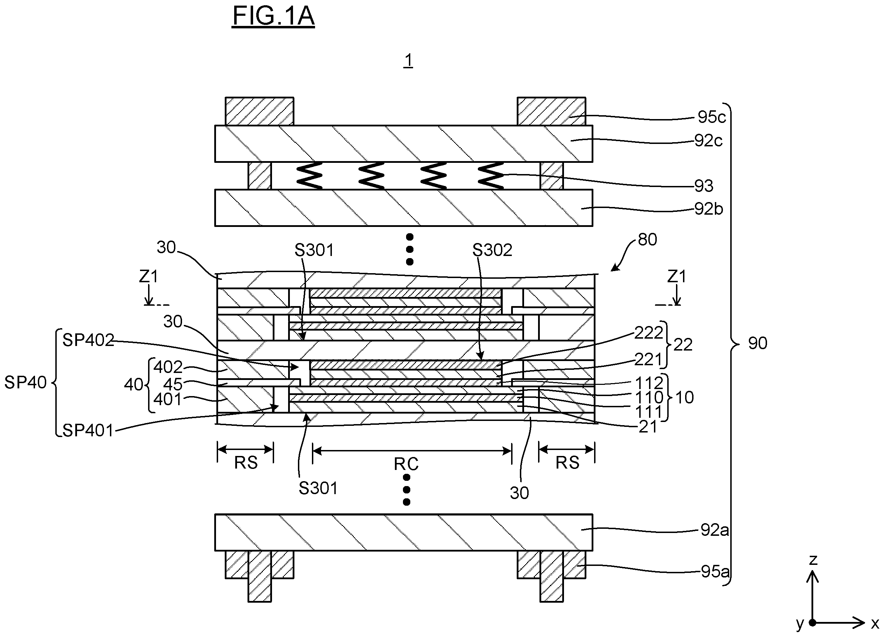

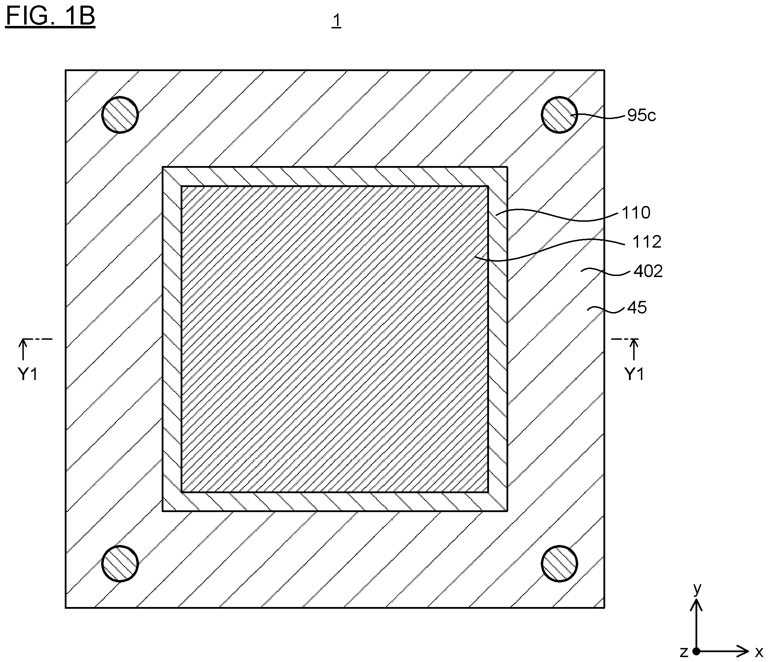

FIG. 1A and FIG. 1B are views schematically illustrating an electrochemical device 1 according to an embodiment.

In FIG. 1A, a longitudinal direction is a vertical direction z, a lateral direction is a first horizontal direction x, and a direction perpendicular to the paper sheet is a second horizontal direction y that is orthogonal to the vertical direction z and the first horizontal direction x. FIG. 1A is a sectional side view of the electrochemical device 1, and illustrates a part corresponding to a surface of a Y1-Y1 portion (xz plane) in FIG. 1B.

In FIG. 1B, a longitudinal direction is the second horizontal direction y, a lateral direction is the first horizontal direction x, and a direction perpendicular to the paper sheet is the vertical direction z. FIG. 1B is a top view of the electrochemical device 1, and illustrates a part corresponding to a surface of a Z1-Z1 portion (xy plane) in FIG. 1A.

As illustrated in FIG. 1A and FIG. 1B, the electrochemical device 1 includes a cell stack 80 and a load application mechanism 90.

[A-1] Cell stack 80

In the electrochemical device 1, the cell stack 80 includes an electrochemical cell 10, an interconnector 30, and a gasket sealing member 40. In the cell stack 80, a plurality of unit cells each including the electrochemical cell 10, the interconnector 30, and the gasket sealing member 40 are stacked in a stack direction (the vertical direction z in this case), and the cell stack 80 is configured to execute power generation and electrolysis. A pair of busbars (illustration is omitted) are electrically connected to the cell stack 80, and it is configured that a current is supplied to the cell stack 80 via the pair of busbars when executing the electrolysis, and a current is taken out via the pair of busbars when executing the power generation.

The respective parts composing the cell stack 80 will be explained in order.

[A-1-1] Electrochemical cell 10

The electrochemical cell 10 is of a flat plate type having a quadrangular shape, for example, and is configured to include an electrolyte membrane 110, a hydrogen electrode 111, and an oxygen electrode 112, the electrolyte membrane 110 being interposed between the hydrogen electrode 111 and the oxygen electrode 112. The electrochemical cell 10 is of a hydrogen electrode support type (fuel electrode support type), for example, and is formed by sequentially stacking the electrolyte membrane 110 and the oxygen electrode 112 on an upper surface of the hydrogen electrode 111 that functions as a support. The electrochemical cell 10 is not limited to one of the hydrogen electrode support type (electrolyte support type, for example), and further, it may also have a shape other than the quadrangular shape (circular shape, or the like). Further, although an area of the hydrogen electrode 111 is the same as an area of the electrolyte membrane 110, and an area of the oxygen electrode 112 is smaller than the area of the electrolyte membrane 110, the configuration is not limited to this.

In the electrochemical cell 10, the electrolyte membrane 110 is formed of an ion conductive solid oxide (yttria-stabilized zirconia (YSZ), for example) through which an oxide ion ($O^{2-}$) permeates. The electrolyte membrane 110 is configured to be denser than the hydrogen electrode 111 and the oxygen electrode 112.

In the electrochemical cell 10, the hydrogen electrode 111 is composed of a porous electrical conductor (cermet formed by using nickel particles and ceramic particles such as YSZ, for example).

In the electrochemical cell 10, the oxygen electrode 112 is composed of a porous electrical conductor (a perovskite oxide such as $LaSrMnO_3$).

In the cell stack 80, there are a plurality of electrochemical cells 10, and the plurality of electrochemical cells 10 are arranged in a stack direction. The plurality of electrochemical cells 10 are connected in series with the interconnectors 30 and the like interposed therebetween, for the purpose of increasing a power output and the like.

[A-1-2] Interconnector 30

The interconnector 30 is of a flat plate type having a quadrangular shape, for example, and is formed of a conductive material such as metal.

In the cell stack 80, there are a plurality of interconnectors 30, and each of the plurality of interconnectors 30 is interposed between each of the plurality of electrochemical cells 10 arranged in the stack direction.

Each of the plurality of interconnectors 30 includes a first interconnector surface S301 and a second interconnector surface S302.

In the interconnector 30, the first interconnector surface S301 is positioned on a side of the hydrogen electrode 111, and faces the hydrogen electrode 111. The first interconnector surface S301 may be formed with a flow path through which a hydrogen electrode gas passes.

In the interconnector 30, the second interconnector surface S302 is positioned on a side of the oxygen electrode 112, and faces the oxygen electrode 112. The second interconnector surface S302 may be formed with a flow path through which an oxygen electrode gas passes.

The coating may be applied onto the surface of the interconnector 30 for improving the oxidation resistance, reducing the electrical resistance, and for the other purposes. In the cell stack 80, the material, the installation position, the shape, the structure, and the like of the respective interconnectors 30 may differ appropriately.

[A-1-3] Gasket sealing member 40

The gasket sealing member 40 is of a frame shape, and at a center portion thereof, there is provided a housing space SP40 that houses the electrochemical cell 10. The housing space SP40 has a quadrangular planar shape. There are a plurality of gasket sealing members 40, and each of the plurality of gasket sealing members 40 is provided to surround the housing space SP40, at a position between each of the plurality of interconnectors 30 arranged in the stack direction.

Each of the plurality of gasket sealing members 40 is configured to create a sealed state between each of the plurality of interconnectors 30 arranged in the stack direction. Each of the plurality of gasket sealing members 40 is formed of an insulating material, for example, and it is configured that a portion at which the gasket sealing member 40 is interposed between each of the plurality of interconnectors 30 arranged in the stack direction, has an electrically insulating state.

Here, the gasket sealing member 40 includes a hydrogen electrode side sealing part 401, an oxygen electrode side sealing part 402, and a partition part 45, and the housing space SP40 has a hydrogen electrode side housing part SP401 and an oxygen electrode side housing part SP402.

The hydrogen electrode side sealing part 401 is provided to surround the hydrogen electrode side housing part SP401, and in the inside of the hydrogen electrode side housing part SP401, the electrolyte membrane 110 and the hydrogen electrode 111 of the electrochemical cell 10 are housed. The hydrogen electrode side sealing part 401 prevents the hydrogen electrode gas from being leaked from the hydrogen electrode side housing part SP401. The hydrogen electrode side housing part SP401 further houses, in the inside thereof, a hydrogen electrode current collector 21. A gap is interposed between a side surface of the hydrogen electrode side housing part SP401, and respective side surfaces of the electrolyte membrane 110, the hydrogen electrode 111, and the hydrogen electrode current collector 21.

The oxygen electrode side sealing part 402 is provided to surround the oxygen electrode side housing part SP402, and in the inside of the oxygen electrode side housing part SP402, the oxygen electrode 112 of the electrochemical cell 10 is housed. The oxygen electrode side sealing part 402 prevents the oxygen electrode gas from being leaked from the oxygen electrode side housing part SP402. The oxygen electrode side housing part SP402 further houses, in the inside thereof, an oxygen electrode current collector 22. A gap is interposed between a side surface of the hydrogen electrode side housing part SP401, and respective side surfaces of the oxygen electrode 112 and the oxygen electrode current collector 22.

The partition part 45 is provided to partition between the hydrogen electrode side housing part SP401 and the oxygen electrode side housing part SP402, in a state where the electrochemical cell 10 is housed in the housing space SP40. The partition part 45 includes a portion that projects inward, at a position above the hydrogen electrode side housing part SP401, and that projecting portion is brought into contact with an upper surface of the electrolyte membrane 110. The partition part 45 is provided for preventing the hydrogen electrode gas from being leaked from the hydrogen electrode side housing part SP401 to the oxygen electrode side housing part SP402, and preventing the oxygen electrode gas from being leaked from the oxygen electrode side housing part SP402 to the hydrogen electrode side housing part SP401.

The configuration of the gasket sealing member 40 is not limited to the above-described one. In the cell stack 80, the material, the installation position, and the like of the respective gasket sealing members 40 may differ appropriately, for the purpose of preventing the leakage. Further, the gasket sealing member 40 may also be formed by using a paste, for example.

[A-1-4] Hydrogen electrode current collector 21

The hydrogen electrode current collector 21 is interposed between the hydrogen electrode 111 and the first interconnector surface S301, in the housing space SP40, and includes a portion that is brought into contact with the hydrogen electrode 111 and the first interconnector surface S301.

The hydrogen electrode current collector 21 has a net-shaped structure or a porous structure, and is configured to make a hydrogen electrode gas consumed or produced in the hydrogen electrode 111 permeate therethrough. The hydrogen electrode current collector 21 is formed of a conductive material that is difficult to be reduced in a reducing atmosphere created by the hydrogen electrode gas, and it electrically connects between the hydrogen electrode 111 and the interconnector 30. Concretely, the hydrogen electrode current collector 21 is formed by using a metal material such as nickel.

In the cell stack 80, the material, the installation position, the shape, the structure, and the like of the respective hydrogen electrode current collectors 21 may differ appropriately. Further, the hydrogen electrode current collector 21 may also be formed by using a paste, for example.

[A-1-5] Oxygen electrode current collector 22

The oxygen electrode current collector 22 is interposed between the oxygen electrode 112 and the second interconnector surface S302, in the housing space SP40, and includes a portion that is brought into contact with the oxygen electrode 112 and the second interconnector surface S302.

The oxygen electrode current collector 22 has a net-shaped structure or a porous structure, similarly to the hydrogen electrode current collector 21, and is configured to make an oxygen electrode gas consumed or produced in the oxygen electrode 112 permeate therethrough. The oxygen electrode current collector 22 is formed of a high-conductive material being a conductive material that is difficult to be oxidized in an oxidizing atmosphere created by the oxygen electrode gas, and it electrically connects between the oxygen electrode 112 and the interconnector 30.

In the present embodiment, the oxygen electrode current collector 22 is, for example, a stack including a current collector layer 221 and a current collector layer 222, the current collector layer 221 and the current collector layer 222 being stacked in a stack direction of a unit cell.

In the oxygen electrode current collector 22, the current collector layer 221 is brought into contact with the oxygen electrode 112. In the oxygen electrode current collector 22, the current collector layer 222 is brought into contact with the second interconnector surface S302.

In the oxygen electrode current collector 22 of the present embodiment, a Young's modulus E1 of the current collector layer 221 and a Young's modulus E2 of the current collector layer 222 are different. The oxygen electrode current collector 22 is configured so that the Young's modulus E2 of the current collector layer 222 becomes higher than the Young's modulus E1 of the current collector layer 221, for example (specifically, E1 < E2).

Concretely, the current collector layer 221 is formed of a metal material such as silver, for example. The current collector layer 222 is composed of a metal material containing, in its composition, at least one selected from an element group consisting of Fe, Cr, Ni, and Co, for example. The current collector layer 222 is formed of an alloy of stainless steel or the like, for example. Other than the above, the current collector layer 222 may also be composed of a simple substance of Cr, a simple substance of Ni, or a simple substance of Co.

Further, in the oxygen electrode current collector 22 of the present embodiment, a porosity n1 of the current collector layer 221 and a porosity n2 of the current collector layer 222 are different. Here, the oxygen electrode current collector 22 is configured so that the porosity n1 of the current collector layer 221 becomes higher than the porosity n2 of the current collector layer 222, for example (specifically, n1 > n2).

A thickness of each of the plurality of current collector layers (= the current collector layer 221, and the current collector layer 222) composing the oxygen electrode current collector 22 is adjusted so that, in the cell stack 80, each of a pressure that is applied to a surface RC of a center portion at which the oxygen electrode current collector 22, the electrochemical cell 10, and the hydrogen electrode current collector 21 are stacked, and a pressure that is applied to a surface of a peripheral portion RS at which the gasket sealing members 40 are stacked, has an appropriate value. For example, the pressure that is applied to the surface RC of the center portion, and the pressure that is applied to the surface of the peripheral portion RS are measured by using a pressure sensitive paper. Further, the thickness of each of the plurality of current collector layers is adjusted so that each of the pressure that is applied to the surface RC of the center portion and the pressure that is applied to the surface of the peripheral portion RS, has a design value. The design value of the thickness of each of the plurality of current collector layers is set in advance by taking characteristics such as thermal expansion coefficients of the respective parts into consideration.

In the cell stack 80, the material, the installation position, the shape, the structure, and the like of the respective oxygen electrode current collectors 22 may differ appropriately. Further, the oxygen electrode current collector 22 may also be formed by additionally using a paste, for example.

[A-2] Load application mechanism 90

In the electrochemical device 1, the load application mechanism 90 has load receiving plates 92a, 92b, 92c, a load alleviation member 93, and load application members 95a, 95b, and is configured to apply a load to the cell stack 80 in the stack direction. The load application members 95a, 95b may be provided together with the cell stack 80 in an environment in which the temperature becomes high for operating the cell stack 80, and they may also be installed in a room temperature environment.

The respective parts composing the load application mechanism 90 will be explained in order.

[A-2-1] Load receiving plates 92a, 92b, 92c

Each of the load receiving plates 92a, 92b, 92c is a quadrangular plate-shaped body, for example. The load receiving plate 92a is positioned on one end side (lower side in FIG. 1A) of the cell stack 80 in the stack direction. The load receiving plate 92b is positioned on the other end side (lower side in FIG. 1B) of the cell stack 80 in the stack direction. Specifically, the load receiving plate 92a and the load receiving plate 92b are arranged to sandwich the cell stack 80 in the stack direction. Further, the load receiving plate 92c is positioned on the other end side of the cell stack 80, relative to the load receiving plate 92b in the stack direction. It is preferable that each of the load receiving plates 92a, 92b, 92c is thicker and has higher stiffness than the interconnector 30, in order to uniformize an in-plane distribution of the load to be applied to the interconnector 30 in the cell stack 80.

[A-2-1] Load alleviation member 93

The load alleviation member 93 is, for example, a biasing component such as a spring. The load alleviation member 93 is interposed between the load receiving plate 92b and the load receiving plate 92c in the stack direction. The load alleviation member 93 is provided for alleviating the load to be applied to the cell stack 80 in the stack direction during a process of increasing a temperature of the cell stack 80 to the operating temperature or a process of keeping the temperature of the cell stack 80 to the operating temperature.

[A-2-1] Load application members 95a, 95b

The load application members 95a, 95b are fastening components, for example, and are configured to fasten among each of the load receiving plates 92a, 92b, 92c for applying the load to the cell stack 80 in the stack direction. The load application member 95a is a bolt, for example, and the load application member 95b is a nut, for example. A shaft of the bolt being the load application member 95a is inserted into an insertion port formed on each of the load receiving plates 92a, 92b, 92c, and the nut being the load application member 95b is attached, thereby fastening among each of the load receiving plates 92a, 92b, 92c.

Note that the load application mechanism 90 is not limited to the above, and may also be a device such as a press machine.

[B] Summary

As described above, in the present embodiment, the oxygen electrode current collector 22 is formed by stacking the current collector layer 221 (the first current collector layer) and the current collector layer 222 (the second current collector layer) in the stack direction. In the oxygen electrode current collector 22, the Young's modulus E1 of the current collector layer 221 and the Young's modulus E2 of the current collector layer 222 are different. Specifically, the oxygen electrode current collector 22 is composed by stacking the plurality of current collector layers with different stiffness.

Accordingly, in the present embodiment, even in a case where the electrochemical cell 10 is warped and the surface of the oxygen electrode 112 becomes a convex surface projecting in a convex form, the surface of the oxygen electrode current collector 22 follows the shape of the convex surface, to thereby alleviate the load that is applied to the surface of the electrochemical cell 10 in the stack direction. In the oxygen electrode current collector 22 of the present embodiment, it is possible to reduce a displacement difference of the layer with small Young's modulus (the layer with low stiffness) by the layer with large Young's modulus (the layer with large stiffness), so that a width of allowable elastic modulus becomes large.

As a result of this, in the present embodiment, the oxygen electrode 112 and the oxygen electrode current collector 22 are brought into close contact with each other, and the load is uniformly applied to the surface between the oxygen electrode 112 and the oxygen electrode current collector 22, resulting in that the electrical resistance can be prevented from being increased between the oxygen electrode 112 and the oxygen electrode current collector 22, and the occurrence of breakage can also be prevented. Further, since the adhesiveness between the interconnector 30 and the gasket sealing member 40, for example, is also improved, it is possible to sufficiently realize the prevention of gas leakage.

Therefore, in the present embodiment, it is possible to easily improve the performance of the electrochemical device 1.

In the present embodiment, the oxygen electrode current collector 22 is composed of the plurality of current collector layers with different Young's modulus and the like. The hydrogen electrode current collector 21 is not composed of the plurality of current collector layers with different Young's modulus and the like. It becomes easy to select a more appropriate Young's modulus by stacking a plurality of current collector layers with different Young's modulus, so that it is possible to make the oxygen electrode current collector 22 to be brought into contact within the cell plane in a more uniform load distribution.

Further, in the oxygen electrode current collector 22 of the present embodiment, the porosity n1 of the current collector layer 221 and the porosity of the current collector layer 222 are different. Generally, the Young's modulus changes when the porosity changes, so that by providing the current collector layer 221 and the current collector layer 222 with different porosity, it is possible to make the oxygen electrode current collector 22 to be brought into contact within the cell plane in a more uniform load distribution.

[C] Modified examples

[C-1] Modified example 1

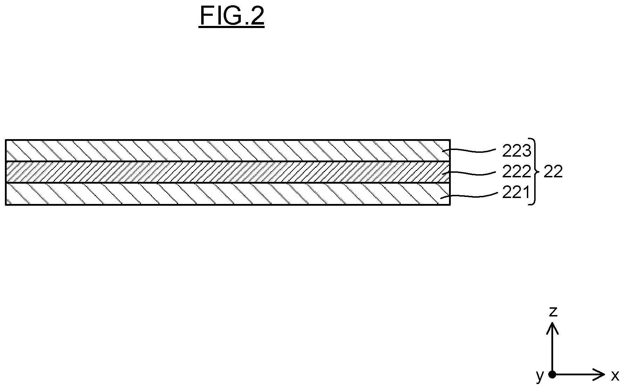

FIG. 2 is a view schematically illustrating an oxygen electrode current collector 22 of the modified example 1. In FIG. 2, the oxygen electrode current collector 22 is illustrated, in an extracted manner, in the electrochemical device 1 (refer to FIG. 1A).

As illustrated in FIG. 2, the oxygen electrode current collector 22 of the present modified example is a stack obtained by stacking the current collector layer 221, the current collector layer 222, and a current collector layer 223.

Although an illustration is omitted, in the oxygen electrode current collector 22 of the present modified example, the current collector layer 221 is brought into contact with the oxygen electrode 112 (refer to FIG. 1A). In the current collector layer 221 and the current collector layer 222, the current collector layer 221 is formed of a metal material such as silver, for example. The current collector layer 223 is brought into contact with the second interconnector surface S302 (refer to FIG. 1A), and is composed of a metal material containing, in its composition, at least one selected from an element group consisting of Fe, Cr, Ni, and Co, for example.

As described above, the oxygen electrode current collector 22 may also be composed of the current collector layers of three layers or more. Also in this case, it is possible to obtain an effect similar to that of the above-described embodiment.

Note that in the oxygen electrode current collector 22, the current collector layer with the smallest Young's modulus out of the plurality of current collector layers is preferably positioned on the side of the electrochemical cell 10 so as to be brought into contact with the oxygen electrode 112. Accordingly, even if the surface of the oxygen electrode 112 is warped, the surface of the oxygen electrode current collector 22 is brought into closer contact with the warped surface of the oxygen electrode 112, so that it is possible to further improve the performance of the electrochemical cell 10.

In the oxygen electrode current collector 22, the thickness of the current collector layer with the highest Young's modulus out of the plurality of current collector layers is preferably larger than the thickness of each of the other current collector layers. It is more preferable that the thickness of the current collector layer with the highest Young's modulus is 50% or more of the thickness of the oxygen electrode current collector 22. The current collector layer with the highest Young's modulus is preferably composed of a metal material containing, in its composition, at least one selected from an element group consisting of Fe, Cr, Ni, and Co. The oxygen electrode current collector 22 is preferably composed to include a plurality of current collector layers whose Young's moduli are different by two times or more. The oxygen electrode current collector 22 preferably includes a current collector layer whose Young's modulus is 30 MPa or more. The plurality of current collector layers composing the oxygen electrode current collector 22 may differ in their respective Young's moduli, and they may also include the current collector layers with the same Young's modulus.

Further, in the oxygen electrode current collector 22, the current collector layer with the smallest porosity out of the plurality of current collector layers is preferably positioned on the side of the electrochemical cell 10 so as to be brought into contact with the oxygen electrode 112. This facilitates a smooth flow of the oxygen electrode gas.

The oxygen electrode current collector 22 preferably includes a dense layer with a porosity of 1% or less as the current collector layer, in addition to the porous layer with a porosity of 10% or more as the current collector layer. The oxygen electrode current collector 22 may have a plurality of current collector layers being the porous layers, and the porosities of the plurality of porous layers may differ, respectively. A thickness of the current collector layer being the dense layer is preferably 50% or more of the thickness of the oxygen electrode current collector 22. The current collector layer being the dense layer is preferably composed of a metal material containing, in its composition, at least one selected from an element group consisting of Fe, Cr, Ni, and Co. The plurality of current collector layers composing the oxygen electrode current collector 22 may differ in their respective porosities, and they may also include the current collector layers with the same porosity.

[C-2] Modified example 2

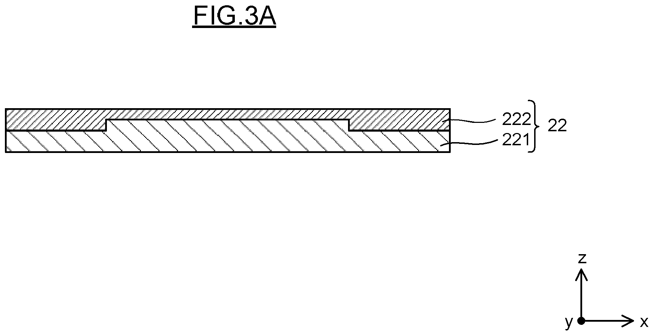

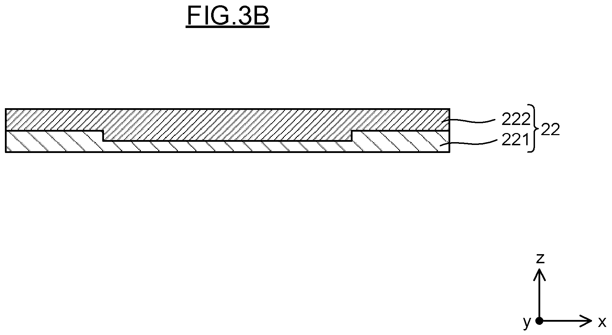

FIG. 3A and FIG. 3B are views schematically illustrating an oxygen electrode current collector 22 of the modified example 2. In FIG. 3A and FIG. 3B, the oxygen electrode current collector 22 is illustrated, in an extracted manner, in the electrochemical device 1 (refer to FIG. 1A).

As illustrated in FIG. 3A and FIG. 3B, the oxygen electrode current collector 22 of the present modified example may also be configured so that each of the current collector layer 221 and the current collector layer 222 includes portions whose thicknesses differ between a center portion positioned at a center of a surface orthogonal to the stack direction (an xy plane in FIG. 2B) and a side portion positioned on the side of the center portion.

Concretely, as illustrated in FIG. 3A, the thickness of the center portion may be larger than that of the side portion in the current collector layer 221, and the thickness of the side portion may be larger than that of the center portion in the current collector layer 222.

Further, as illustrated in FIG. 3B, the thickness of the center portion may be smaller than that of the side portion in the current collector layer 221, and the thickness of the side portion may be smaller than that of the center portion in the current collector layer 222.

The thickness of each portion is optimized by checking the performance of the electrochemical device 1, for example. Also in this case, it is possible to obtain effects similar to those of the above-described embodiment. Note that the present modified example exemplifies a case where the thickness of the center portion and the entire thickness of the side portion surrounding the center portion are different, but, if necessary, it is also possible that the thickness of a part of the side portion surrounding the center portion is different from the thickness of the center portion.

[C-3] Other modified examples

Although the above-described embodiment has explained a case where in each of plurality of unit cells composing the cell stack 80, it is configured such that the current collector layer 221 of the oxygen electrode current collector 22 is brought into contact with the oxygen electrode 112, the configuration is not limited to this. Unlike the case of the above-described embodiment, modified example 2, and modified example 3, the current collector layer 222 and the current collector layer 221 may also be arranged sequentially from the oxygen electrode 112 side. Further, unlike the case of the modified example 1, the current collector layer 223, the current collector layer 222, and the current collector layer 221 may also be arranged sequentially from the oxygen electrode 112 side. Specifically, the arrangement relation of the plurality of current collector layers with different Young's modulus, composing the oxygen electrode current collector 22 is not limited in particular.

Further, the oxygen electrode current collector 22 may also include a plurality of porous layers whose porosity is 10% or more, as current collector layers. In this case, the plurality of porous layers preferably have a porosity difference of 5% or more. Further, the current collector layer being the porous layer in the oxygen electrode current collector 22 may have a porosity differed between a center portion positioned at a center of a surface orthogonal to the stack direction and a side portion positioned at a side of the center portion. In this case, the difference between the porosity of the center portion and the porosity of the side portion is preferably 5% or more.

The case where the oxygen electrode current collector 22 is composed of the plurality of current collector layers has been explained as above, but not limited to this. Similarly to the oxygen electrode current collector 22, the hydrogen electrode current collector 21 may also be composed of a plurality of current collector layers. Specifically, it is only required that at least one of the hydrogen electrode current collector 21 and the oxygen electrode current collector 22 is composed of a plurality of current collector layers.

EXAMPLES

Hereinafter, working examples and a comparative example will be explained by using Table 1. In Table 1, (example 1) and (example 2) correspond to the working examples, and (example C1) corresponds to the comparative example.

[Table 1]

| | | | Example 1 | Example 2 | Example C1 |
|---|---|---|---|---|---|
| Oxygen electrode current collector 22 | Current collector layer 223 | Material | - | Stainless steel (SUS) | - |
| | | Thickness (mm) | - | 0.7 | - |
| | | Young's modulus (Mpa) | - | 54 | - |
| | | Porosity (%) | - | 0.1 or less | - |
| | Current collector layer 222 | Material | Stainless steel (SUS) | Silver (Ag) | - |
| | | Thickness (mm) | 0.7 | 0.1 | - |
| | | Young's modulus (Mpa) | 54 | 13 | - |
| | | Porosity (%) | 0.1 or less | 84 | - |
| | Current collector layer 221 | Material | Silver (Ag) | Silver (Ag) | Silver (Ag) |
| | | Thickness (mm) | 0.3 | 0.2 | 0.7 |
| | | Young's modulus (Mpa) | 27.3 | 32.6 | 27.3 |
| | | Porosity (%) | 67 | 61 | 67 |
| Total thickness (mm) | | | 1.0 | 1.0 | 0.7 |

[a] Production of samples

A procedure of producing samples of the oxygen electrode current collector 22 according to the respective examples will be explained in order by using Table 1.

(Example 1)

In (example 1), a stack of the current collector layer 221 and the current collector layer 222 was produced as the oxygen electrode current collector 22, as shown in Table 1. Here, the respective layers were stacked under the condition shown in Table 1, thereby producing the oxygen electrode current collector 22. Specifically, in (example 1), the Young's modulus E1 of the current collector layer 221 and the Young's modulus E2 of the current collector layer 222 satisfy a relation represented by the following (equation 1a), and the porosity n1 of the current collector layer 221 and the porosity n2 of the current collector layer 222 satisfy the following (equation 1b).

$$E1 < E2 \qquad \cdots \text{(Equation 1a)}$$

$$n1 > n2 \ \cdots \text{(Equation 1b)}$$

Further, the oxygen electrode current collector 22 produced as described above was used to assemble the electrochemical device 1, as illustrated in FIG. 1B. Specifically, the electrochemical device 1 of (example 1) corresponds to the electrochemical device 1 of the embodiment.

(Example 2)

In (example 2), a stack of the current collector layer 221, the current collector layer 222, and the current collector layer 223 was produced as the oxygen electrode current collector 22, as shown in Table 1. Here, the respective layers were stacked under the condition shown in Table 1, thereby producing the oxygen electrode current collector 22. Specifically, in (example 2), the Young's modulus E1 of the current collector layer 221, the Young's modulus E2 of the current collector layer 222, and the Young's modulus E3 of the current collector layer 223 satisfy a relation represented by the following (equation 2a), and the porosity n1 of the current collector layer 221, the porosity n2 of the current collector layer 222, and the porosity n3 of the current collector layer 223 satisfy the following (equation 2b).

$$E3 > E1 > E2 \ \cdots \text{(Equation 2a)}$$

$$n2 > n1 > n3 \qquad \cdots \text{(Equation 2b)}$$

The oxygen electrode current collector 22 produced as described above corresponds to the oxygen electrode current collector 22 of the modified example 1 illustrated in FIG. 2. Further, the oxygen electrode current collector 22 produced as described above was used to assemble the electrochemical device 1, as illustrated in FIG. 1B. Specifically, the electrochemical device 1 of (example 2) corresponds to the electrochemical device 1 of the modified example 1. The electrochemical device 1 of (example 2) is substantially the same as that of (example 1), except for a point that the oxygen electrode current collector 22 is different from that of (example 1).

(Example C1)

In (example C1), a single layer body of the current collector layer 221 was produced as the oxygen electrode current collector 22, as shown in Table 1. Further, the oxygen electrode current collector 22 produced as described above was used to assemble the electrochemical device 1. Specifically, the electrochemical device 1 of (example C1) is substantially the same as that of (example 1), except for a point that the oxygen electrode current collector 22 is different from that of (example 1).

[b] Characteristic evaluation

An I-V characteristic was determined regarding the electrochemical device 1 of each example. The I-V characteristic was obtained in a manner that a current was flowed through the electrochemical cell 10 so as to execute electrolysis of water vapor under a high-temperature environment, and a bath voltage with respect to that current was evaluated.

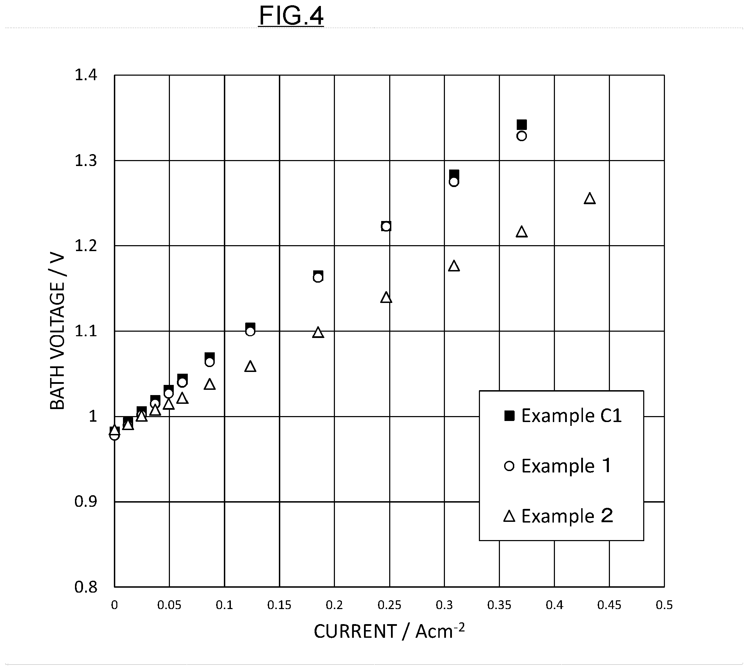

FIG. 4 is a view illustrating the I-V characteristic obtained regarding each example.

As can be understood from FIG. 4, in (example 1) and (example 2), the bath voltage is lower than that of (example C1), and thus good performance was exhibited. Concretely, it was confirmed that in (example 1), the bath voltage exhibited better performance than (example C1) in the vicinity of 1.3 V Further, it was confirmed that in (example 2), the bath voltage was in the vicinity of 1.2 V under a current condition in which the bath voltage in (example C1) was in the vicinity of 1.3 V, and thus good performance was exhibited.

As illustrated in FIG. 4, regarding a value of the bath voltage at the same current value, the value in (example 1) and (example 2) is lower than that of (example C1). Based on the above, it was confirmed that the contact between the oxygen electrode current collector 22 and the oxygen electrode 112 of the electrochemical cell 10 was sufficient, and the electrical resistance therebetween was sufficiently low.

It can be estimated that since the oxygen electrode current collector 22 of each of (example 1) and (example 2) was the stack of the plurality of current collector layers with different Young's modulus, the elasticity was increased more than that of (example C1), resulting in that the reduction in load applied to the electrochemical cell 10 due to the deformation of the member during the temperature increase, was prevented.

Note that although not shown in Table 1, the oxygen electrode current collector 22 produced under the same condition as that of (example C1) except for a point that the total thickness of the oxygen electrode current collector 22 was the same as that of (example 1) and (example 2), was used to assemble the electrochemical device 1. However, in this case, cracking occurred in the electrochemical cell 10, and thus it was not possible to obtain the I-V characteristic.

<Others>

Although some embodiments of the present invention have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

EXPLANATION OF REFERENCE SIGNS

1... electrochemical device, 10...electrochemical cell, 21...hydrogen electrode current collector, 22...oxygen electrode current collector, 30...interconnector, 40...gasket sealing member, 45...partition part, 80...cell stack, 90...load application mechanism, 92a...load receiving plate, 92b...load receiving plate, 92c...load receiving plate, 93...load alleviation member, 95a...load application member, 95b...load application member, 110...electrolyte membrane, 111...hydrogen electrode, 112...oxygen electrode, 221...current collector layer (first current collector layer), 222...current collector layer (second current collector layer), 223...current collector layer (third current collector layer), 401...hydrogen electrode side sealing part, 402...oxygen electrode side sealing part, S301...first interconnector surface, S302 ... second interconnector surface, SP40...housing space, SP401...hydrogen electrode side housing part, SP402...oxygen electrode side housing part

**Claims**

1. An electrochemical device, comprising a cell stack including a plurality of electrochemical cells each configured to sandwich an electrolyte membrane by a hydrogen electrode and an oxygen electrode, the plurality of electrochemical cells being stacked to be arranged in a stack direction, wherein:
   the cell stack includes:

   a plurality of interconnectors each of which is interposed between each of the plurality of electrochemical cells arranged in the stack direction, and includes a first interconnector surface on a side of the hydrogen electrode, and a second interconnector surface on a side of the oxygen electrode; and
   a plurality of gasket sealing members each of which is provided to surround a housing space that houses the electrochemical cell, at a position between each of the plurality of interconnectors arranged in the stack direction;
   each of the plurality of electrochemical cells has:

   a hydrogen electrode current collector interposed between the hydrogen electrode and the first interconnector surface in the housing space, and is brought into contact with the hydrogen electrode and the first interconnector surface; and
   an oxygen electrode current collector interposed between the oxygen electrode and the second interconnector surface in the housing space, and is brought into contact with the oxygen electrode and the second interconnector surface;
   at least either of the hydrogen electrode current collector and the oxygen electrode current collector includes at least a first current collector layer and a second current collector layer, the first current collector layer and the second current collector layer being stacked in the stack direction; and

a Young's modulus of the first current collector layer and a Young's modulus of the second current collector layer are different.

2. The electrochemical device according to claim 1, wherein
the first current collector layer and the second current collector layer are configured to include portions whose thicknesses differ between a center portion and a side portion on a surface orthogonal to the stack direction.

3. The electrochemical device according to claim 1, wherein
a porosity of the first current collector layer and a porosity of the second current collector layer are different.

4. The electrochemical device according to claim 1, wherein
the oxygen electrode current collector is composed by stacking at least the first current collector layer and the second current collector layer.

5. The electrochemical device according to claim 1, wherein
the second current collector layer is composed of a material containing, in its composition, at least one selected from an element group consisting of Fe, Cr, Ni, and Co.

FIG.1A

FIG. 1B

1

95c

110

112

402

45

Y1

Y1

EP 4 654 303 A1

14

y

z

x

EP 4 654 303 A1

## FIG.2

223 ⎫
222 ⎬ 22
221 ⎭

z
y ● → x

EP 4 654 303 A1

# FIG.3A

## FIG.3B

222
221
} 22

x
z
y

FIG.4

EP 4 654 303 A1

# EUROPEAN SEARCH REPORT

**Application Number**

EP 25 15 2769

Europäisches
Patentamt
European
Patent Office
Office européen
des brevets

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 367 488 A1 (NGK SPARK PLUG CO [JP]) 29 August 2018 (2018-08-29) * paragraphs [0020] - [0022], [0029] - [0030], [0036]; figures 4, 5 * ----- | 1-5 | INV. H01M8/0206 H01M8/0228 H01M8/0232 H01M8/0245 H01M8/0247 |

**TECHNICAL FIELDS SEARCHED (IPC)**

H01M

The present search report has been drawn up for all claims

| Place of search | Date of completion of the search | Examiner |
|---|---|---|
| Munich | 7 July 2025 | Goldbacher, Ute |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 15 2769

This annex lists the patent family members relating to the patent documents cited in the above-mentioned European search report.
The members are as contained in the European Patent Office EDP file on
The European Patent Office is in no way liable for these particulars which are merely given for the purpose of information.

07-07-2025

| Patent document cited in search report | | Publication date | Patent family member(s) | Publication date |
|---|---|---|---|---|
| EP 3367488 | A1 | 29-08-2018 | CN 108140854 A | 08-06-2018 |
| | | | EP 3367488 A1 | 29-08-2018 |
| | | | JP 6514772 B2 | 15-05-2019 |
| | | | JP WO2017069033 A1 | 19-10-2017 |
| | | | KR 20180049031 A | 10-05-2018 |
| | | | US 2018323446 A1 | 08-11-2018 |
| | | | WO 2017069033 A1 | 27-04-2017 |

EPO FORM P0459

For more details about this annex : see Official Journal of the European Patent Office, No. 12/82